# EUROPEAN PATENT APPLICATION

(11) **EP 1 798 496 A1**
(43) Date of publication of application: **20.06.2007**
(21) Application number: 05027189.9
(22) Date of filing: 13.12.2005
(51) Int. Cl.: F24H 9/12, F16L 55/11

(54) **Flexible plug for providing forced flow in a heating device**

(71) Applicant: A/S Ribe Jernindustri, 6760 Ribe (DK)
(72) Inventor: Stougaard, Henning, 6760 Ribe (DK)
(74) Representative: Hansen, Jesper Römer

(57) **Abstract**

A flexible plug body for sealing off a first leg of a pipe divider, such as a T-connection, is provided. The flexible plug body may when arranged in a pipe divider provide forced flow in a heating device, such as a radiator. The flexible plug body comprises a plug part for sealing off the first leg and a first securing part connected to the plug part for securing the plug body in the pipe divider.

## Description

### TECHNICAL FIELD OF THE INVENTION

This invention relates to a flexible plug body adapted to seal a first leg of a pipe divider in a heating device when arranged at the pipe divider.

The pipe divider could e.g. be a T-connection.

Furthermore, the invention relates to various uses of the flexible plug body, e.g. to the use of the plug in a heating device for forcing a heat exchange fluid to follow a desired flow pattern by blocking an alternative flow path, in a hot water heating device, in a radiator having at least two heating panels and in a convector having at least two heating panels.

Moreover, the present invention relates to a method of mounting a flexible plug body in the pipe divider in the heating device.

The invention relates to heating devices where natural flow of heat exchange fluid from inlet to outlet does not lead to a satisfactory heat transfer. Particularly, the invention relates to a plug body suitable for positioning in a pipe divider of such a heating device, wherein the plug body when positioned in the pipe divider will force the heat exchange fluid into a desired flow pattern.

### BACKGROUND OF THE INVENTION

It is known to completely block a leg of pipe divider, e.g. a T-connection of a heating device, by welding a metal disk across a leg opening. However, this method is tedious and requires modification of the heating device at an early stage of the manufacturing as stored completed heating devices may not be modified in this way without considerable effort.

In another case, when an installed heating device does not perform according to the expectations, a forced flow path of the heat exchange fluid may improve the heating transfer of the heating device. However, experimentation with forced flow path in such cases until now typically required complete replacement of the heating device with a dedicated forced flow path heating device or irreversible modification of the heating device by welding.

### BRIEF DESCRIPTION OF THE DRAWINGS

The invention will be explained more detailed below in connection with preferred embodiments and with reference to the drawings, in which:
Fig. 1 shows natural circulation of the flow and a forced path of the flow,
Fig. 2 shows a cross-section of the flexible plug body which can be inserted into the "Berg"-type T-connection,
Fig. 3 shows a cross-section of another embodiment of the flexible plug body installed in a "Berg"-type T-connection and a perspective view of this plug, and
Fig. 4 shows a preferred set of tools applied to mount the flexible plug body into the "Berg"-type T-connection.

### DISCLOSURE OF THE INVENTION

According to the present invention, a flexible plug body is provided, which may be installed in an off-the-shelf heating device or in an existing heating system in a fast, safe and affordable manner.

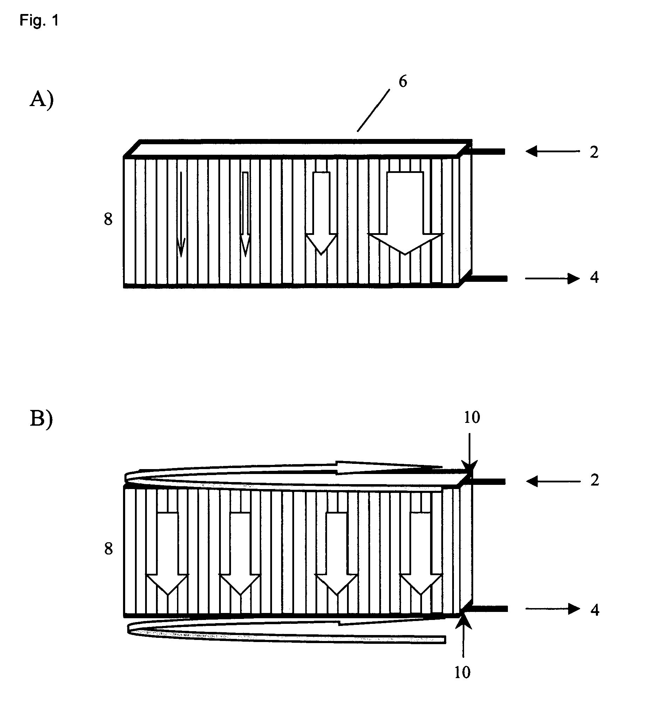

Figure 1 shows the overall circulation of heating fluid in a heating device 6, such as a radiator. Water flows into the heating device at 2 and leaves the radiator at 4. The heating fluid will not necessarily flow uniformly in the heating device. The flow of the heating fluid will follow a route run, where it meets the smallest flow resistance. In Figure 1A this results in a situation, where the heating fluid primarily flows more or less vertically between the entrance 2 and the exit 4 of the heating device. Therefore the part 8 of the heating device away from the end with the entrance 2 and the exit 4 will not be heated as much as desired. An indication of the distribution of the vertical flow along the length of the heating device is indicated by width of the arrows in Figure 1A and B. In other words, the effective length of the heating device is less than the physical length of the heating device in Figure 1A. This is particularly the case when the heating device is in the order of more than about 1.5 meters.

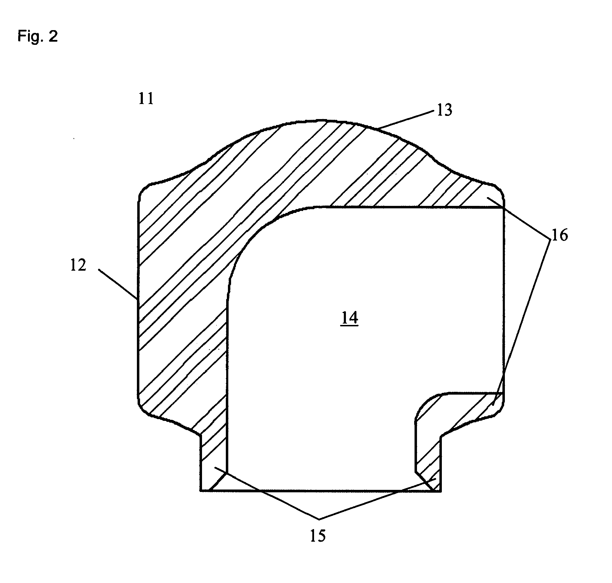

In Figure 2B, the flow of heating fluid is forced into a more desirable path, i.e. forced circulation. The heating fluid will still flow, where it meets the smallest resistance, however, since the pipe divider according to the invention with a blocked leg is applied (e.g. mounted) both at the inlet and the outlet of heating device as indicated by the arrows 10, the flow will be different. The heating fluid will be forced to distribute itself more uniformly in the heating device; i.e. the fluid will be forced to pass the part 8 away from the entrance and exit before it is allowed to exit at the outlet 4 of heating device. Accordingly, the flow of the heating fluid will necessarily distribute more uniformly in the heating device and a more even surface temperature of the heating device is realised.

Generally speaking, the plug body has a first part, which is adapted to seal off a first leg of the pipe divider and a securing part, which is adapted to keep the plug in position, so that the blocking of the first leg is maintained during use of the heating device. The pipe divider is typically a T-connection, where the sealed leg is one of the openings separated by 180°, so that the flow path after application of the plug is a 90° bend. The plug body may also be used for pipe dividers with more than 3 legs or openings, and in such cases, the plug body may seal off more than one leg as long as at least two legs remain open. The plug body may advantageously be shaped so that the outer surface of the body substantially resembles at least a part of the inside of the pipe divider. Preferably, the plug body resembles most of the interior of the pipe divider except from the openings. The hollow inside of the plug body, which hollow part forms the flow path for the heating fluid, is preferably free from sharp corners and narrow cavities.

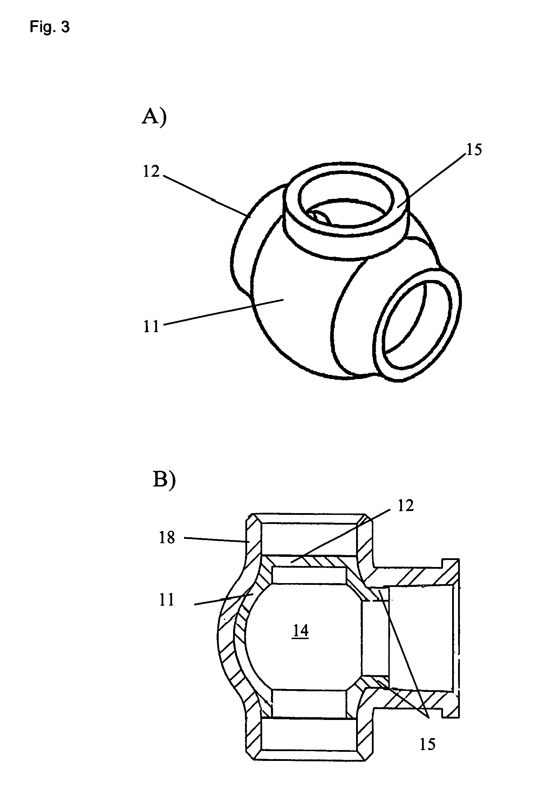

The pipe divider used in most of the relevant heating devices is a T-connection of the "Berg"-type, whereas plug bodies according to the invention may also be used for other types of pipe dividers. Figures 2 and 3 show highly preferred embodiments of the plug body according to the invention. These plugs are adapted to be inserted into a "Berg"-type T-connection, but the plugs may be used for other types of connectors with minor adjustments.

In Figure 2, the plug body has a relatively thick wall section in some part of the plug. This allows for a more regular inner surface of the plug and furthermore, the mould for manufacturing of the plug is more simple and the plug is easier removed from the mould. The flexible plug body 11 has a plug part 12 and a securing part 15. The securing part is connected to the plug part 12 and may typically resemble an inner part of a second leg of the T-connection without blocking the second leg. The outer surface 13 typically closely resembles the inner shape of the pipe divider, i.e. in Figure 2 the "Berg"-type T-connector. The hollow inside of the plug 14 is substantially free from sharp edges and cavities. This embodiment can be considered as at present a best mode plug body.

In Figure 3, the plug body of another embodiment with substantially constant wall thickness is shown. This is particularly clear in Figure 3A, where the plug 11 is installed in a "Berg"-type T-connector 18. This allows for reduced material utilisation and an increased flexibility of the plug as compared to Figure 2. Figure 3B gives a view of the overall shape of an embodiment of the plug. In addition to the first securing part 15, the body may comprise a second securing part 16 - having the same function as the first securing part - which second securing part is connected to the first securing part 15. The second securing part typically resembles an inner part of a third leg of the T-connection without blocking this third leg.

Similarly, the plug body may comprise a third securing part, etc.

In a preferred embodiment, regardless whether the flexible plug body comprises one, two or more securing parts corresponding to one, two or more legs of the pipe divider, e.g. the T-connection, which leg(s) could then be blocked by means of the plug body, the plug body comprises a hollow, substantially spherical surface.

This spherical member is adapted to resemble the inner surface of the plug divider so that the inner diameter of the sphere of the T-connection corresponds to the outer diameter of the spherical member. Hereby, the plug divider (the T-connection) and the flexible plug body may fit together. It could be a tight fit.

In addition, the first securing part 15 - and the second securing part 16, if present - of the plug body typically comprise(s) open flanges. These are adapted to extend into corresponding legs of the T-connection, when the plug body is arranged at the T-connection. This is a simple and yet very efficient way to secure the plug and prevent rotation of it.

In a preferred embodiment, the plug body comprises a substantially spherical surface to be positioned in contact with the pipe divider, e.g. the T-connection. The plug is typically hollow. The plug body has preferably a flange 16 extending into each arm of the pipe divider, e.g. the T-connection. For the arm to be sealed, the flange 12 is closed to form a plug part, whereas the further flanges 15, 16 are open, i.e. these flanges allow for flow of heat exchange fluid through them.

In an exemplary embodiment, the diameter of the opening of the plug body to the right hand side in the figure is about 14 mm, whereas the opening when surrounded by material has a diameter of about 18 mm. The bottom opening also has a diameter of about 14 mm, whereas this opening surrounded by material has bigger diameter, e.g. of 17 - 20 mm. Accordingly, the thickness of the plug body could be from 1 to 4 mm. The diameter of a spherical part of the plug member is from 25 - 31 mm, e.g. 28 mm. However, these dimensions are to be selected carefully to avoid increasing the flow resistance too much.

In general, the material could be deformable allowing insertion of the plug body into "Berg"-type T-connections.

Examples of relevant heating devices - in which the flexible plug body can be applied - are radiators and convectors having at least two heating panels. The invention is particularly advantageous for long heating devices, such as heating devices longer than about 1.5 - 2 meters, and for heating devices with numerous panels, such as two, three, four, five or more panels. The flexible plug body can in general be used in a heating device for forcing a heat exchange fluid to follow a desired flow pattern by blocking an alternative flow path. Examples of uses of the flexible plug body could be in a hot water heating device, in a radiator having two, three, four, five, etc or more heating panels, correspondingly in a convector having two, three, four, five, etc or more heating panels. The heating devices are typically provided with the inlet and the outlet in the same side. Accordingly, the flexible plug body is mounted both at this inlet and outlet, when each of these - in advance - is provided with the pipe divider, e.g. the T-connection.

The plug body can be installed into the pipe divider, e.g. the T-connection, by deforming the plug body elastically and forcing it into the hollow inside of the pipe divider, e.g. the T-connection, in which the plug body will flip back into its original shape. Therefore, the plug body comprises the deformable material, which could e.g. be hydrated nitrile rubber (HNBR), Ethylene propylene rubber (EPDM), Flour rubber (FKM/FPM), co-polymerised polypropylene or Olefinbased elastomer (TPE-O), preferably the plug body consists of HNBR, EPDM, FKM/FPM, co-polymerised PP or TPE-O.

These materials have been selected to ensure minimised corrosion and wear of the plug body. Moreover, these materials are not sensitive to hydrolyse, they do not get deteriorated when exposed to an environmental basic solution, e.g. a basic solution with a pH value between 9.6 and 10. Additionally, these materials are temperature stable when exposed to temperatures between 35 and 120 degrees Celsius. These materials are expected to fulfil their purpose, i.e. to seal or block during about at least 15 years of use.

Due to the securing part 5,6, the plug body cannot rotate or shift once it is in position.

The plug body can in principle be installed into the T-connection by deforming the plug body elastically and forcing it into the hollow space of the T-connection where it will flip back into its original shape. However, typically it requires some kind of a tool to install the plug body properly into the pipe divider, e.g. into the T-connection, especially since it is important that during the instalment the plug body is not deteriorated, e.g. if the plug body due to a wrong pushing force is subjected to contact with the thread of the pipe divider.

For this reason, a method of mounting the flexible plug body into the pipe divider in the heating device is provided.

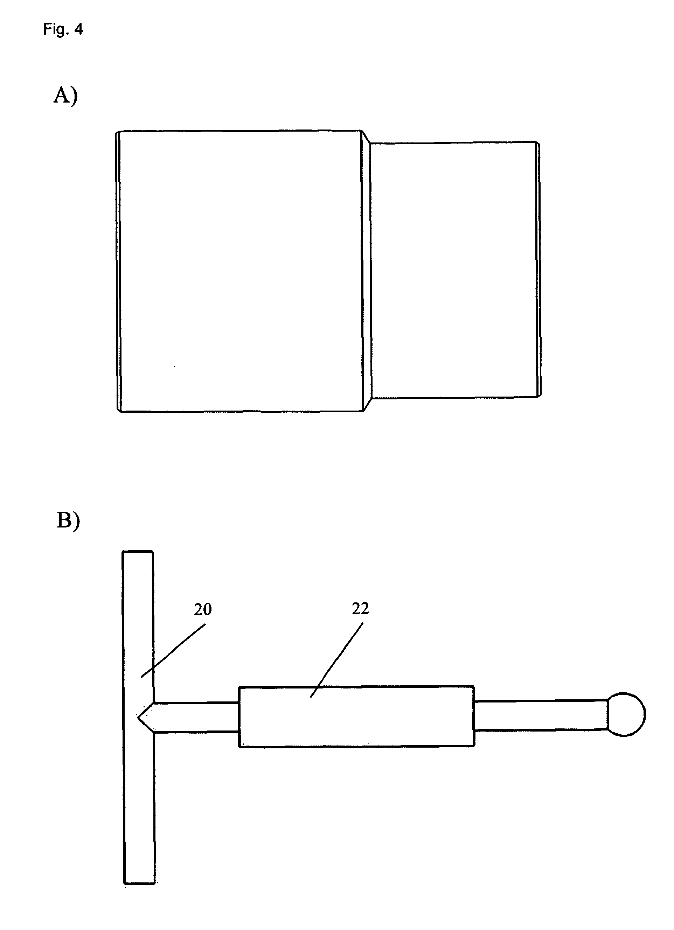

Figure 4 shows tools, which may be applied during mounting of the flexible plug body into the pipe divider. The pipe divider could be the "Berg"-type T-connection. These tools are applied in the method as discussed in the following.

As a first step of the method, the pipe divider, e.g. the T-connection, is fixed, e.g. in a vice by means of its two jaws, or the pipe divider is fixed already due to its mounting in the inlet or outlet of one of the aforementioned heating devices. Subsequently or prior to the fixing, the thread of pipe of the pipe divider - into and through which the flexible body is to be pushed - is preferably provided with a lubricant, such as a silicone base lubricant, soap, e.g. natural soap or a synthetic detergent or another suitable lubricant. It is important that the lubricant does not react with the plug material. Fat has been observed to react to the plug material in some cases and may typically advantageously be avoided.

In the next step, a guiding sleeve as shown in Figure 4A is mounted into the opening of the pipe divider, i.e. into the pipe stub.

Subsequently or prior to the fixing or mounting, the flexible body could be provided with a lubricant, it could be the same as the aforementioned lubricant or another suitable lubricant.

At this stage of the method, the flexible body is pushed into the guiding sleeve, e.g. by means of a first tool 20,22 shown in Figure 4B, whereby the flexible plug body is deformed. It is important that the tool is adapted so that is does not deform the plug plastically during mounting. The lubrication of the flexible body in addition to the guidance from the guiding sleeve assist in lowering the frictional force between the pipe divider and the guiding sleeve.

By means of some pushing part 22, e.g. a pipe, which is e.g. located and movable along the first tool 20, this pushing part is pushed into the guiding sleeve to secure that the flexible body is initially located in the sphere of the pipe divider. Thereafter the pushing part and the guiding sleeve are withdrawn. However, it can be decided to let the guiding sleeve be in place for the rest of this method.

Finally, the flexible body position is adjusted into its lasting location. This may be done by means of a second tool, but the first tool may in some cases also be used for this. As an example, a dedicated second tool may be provided with a ball or a conical member at its distant end. This member is used - when handling the second tool - to force the spherical member to fit the sphere of the T-connection, e.g. by rotation about its axis. As an example, by pushing the second tool and holding it into the T-connection and then rotating either the T-connection and/or the second tool, the flexible body and in particular its spherical member is forced to be in position in its lasting location.

If the guiding sleeve is still in place, it is withdrawn at this stage of the method.

In general, the first tool applied is intended for pushing the flexible plug body into the pipe divider, whereas the second tool is applied for finally adjusting the flexible plug body to be in a proper position in the sphere. In a preferred embodiment, the first and the second tool are combined into one single tool.

The advantage obtained is that deterioration of the plug body is avoided, e.g. it is avoided that a wrong pushing force on the plug body subjects it to be in contact with the thread of the pipe of any of openings in the pipe divider, e.g. T-connections of e.g. the "Berg"-type T-connection.

It is a further advantage that the guiding sleeve - during insertion of the plug body - protects the plug body and secures that the plug body is not in contact with the thread of the pipe at the opening of the pipe divider.

## Claims

1. A flexible plug body (11) adapted to seal off a first leg of a pipe divider in a heating device when arranged at the pipe divider, said plug body comprising
- a plug part (12) adapted to the first leg of the pipe divider and thus sealing off the first leg, and
- a first securing part (15) connected to the plug part (12) and resembling an inner part of a second leg of the pipe divider without blocking the second leg.

2. Plug body according to claim 1, further comprising a second securing part (16) connected to the first securing part, the second securing part resembling an inner part of a third leg of the pipe divider without blocking the third leg.

3. Plug body according to claim 1 or 2, wherein the plug body comprises a hollow, substantially spherical member and the first securing part (15) and the second securing part comprise open flanges (15, 16) adapted to extend into corresponding legs of the pipe divider, when the plug body is arranged at the pipe divider.

4. Plug body according to any one of the claims 1 to 3, wherein said pipe divider is a T-connection.

5. Plug body according to any one of the claims 1 to 4 comprising a deformable material, the deformable material comprises hydrated nitrile rubber (HNBR), Ethylene propylene rubber (EPDM), Flour rubber (FKM/FPM), co-polymerised polypropylene or Olefinbased elastomer (TPE-O), preferably the plug body consists of HNBR, EPDM, FKM/FPM, co-polymerised PP or TPE-O.

6. Use of the flexible plug body according to any one of the claims 1 to 5 in a heating device for forcing a heat exchange fluid to follow a desired flow pattern by blocking an alternative flow path.

7. Use of the flexible plug body according to any one of the claims 1 to 5 in a hot water heating device for forcing a heat exchange fluid to follow a desired flow pattern by blocking an alternative flow path.

8. Use of the flexible plug body according to any one of the claims 1 to 5 in a radiator having at least two heating panels for forcing a heat exchange fluid to follow a desired flow pattern by blocking an alternative flow path.

9. Use of the flexible plug body according to any one of the claims 1 to 5 in a convector having at least two heating panels for forcing a heat exchange fluid to follow a desired flow pattern by blocking an alternative flow path.

10. A method of mounting the flexible plug body in a pipe divider in a heating device according to any one of the claims 1-9, said method comprising the steps of:
fixing the pipe divider,
optionally, providing a thread of the pipe of the pipe divider with a first lubricant,
mounting a guiding sleeve into the opening of the pipe divider,
providing said flexible body with a second lubricant,
pushing the flexible body into said guiding sleeve, optionally by means of a first tool,
withdrawing said guiding sleeve, and
positioning, the flexible body into its lasting location, optionally by means of a second tool.

11. The method according to claim 10, wherein said first tool comprises said pushing pipe.

12. The method according to claim 10 or 11, wherein said pushing pipe is located and movable along the first tool.

13. The method according to claim 10, 11 or 12, wherein said first tool and said second tool are integrated into one combined tool.
